# EUROPEAN PATENT APPLICATION

(11) **EP 2 275 950 A1**
(43) Date of publication of application: **19.01.2011**
(21) Application number: 09009271.9
(22) Date of filing: 16.07.2009
(51) Int. Cl.: G06F 17/30, H04N 7/173, H04L 29/06

(54) **A content distribution system comprising an on-demand server**

(71) Applicant: Koninklijke KPN N.V., 2516 CK The Hague (NL)
(72) Inventor: Van Steenbergen, Ate, 9737 NN Groningen (NL)
(74) Representative: Wuyts, Koenraad Maria

(57) **Abstract**

A content distribution system (100) comprising
- a broadcast server (140) configured for broadcasting a first content stream to at least one content receiving device (120),
- the content receiving device configured for receiving the first content stream and for requesting second content by sending a request comprising data identifying the first content stream to an on-demand server (110) storing the second content, the second content being different from a broadcasted part of the first content stream, and
- the on-demand server configured for receiving the request, identifying the first content and sending the second content at least in dependency on said identification to the content receiving device.

## Description

### FIELD OF THE INVENTION

The invention relates to a content distribution system comprising a broadcast server configured for broadcasting a first content stream to at least one content receiving device which is configured for receiving the first content stream.

The invention further relates to a method of distributing content and to a corresponding computer program.

### BACKGROUND OF THE INVENTION

Systems for content distribution such as regular television broadcasts, such as those over the air, cable or internet, are sometimes supplemented with on-demand services. Using such an on-demand service a user may, for example, select a particular movie. The chosen movie is then sent to the user's viewing equipment. In this situation the user needs to plan beforehand that he wants to view a movie and which one.

Another way to supplement a broadcast with additional services is described in international patent application W02008004211, which is incorporated herein by reference. The application describes a system of digital video streaming, combining both recorded and live material. TV viewers can use the system to watch a content stream via a live TV transmission. The live transmission is transmitted in multicast mode, i.e., broadcast mode. In a multicast transmission, multiple users can watch the same data stream. While the transmission is being broadcast, an operator records the broadcasted data stream in consecutive segments of information.

The recorded broadcasted stream is used for an additional service. For example, while a viewer is watching a live transmission he may press a pause button or a rewind button on a TV remote control. From this point on, the user watches a unicast stream, which is sent to him from the recording operator. A unicast stream is transmitted from a server to a single user. The unicast is specific for this user. For example, if the user is watching a multicast broadcast and pressed the pause button, the content stream is paused for him, and after he resumes watching, the content stream is transmitted to him as a unicast from the recorded material. Similarly, if the user had pressed the rewind button, the operator could send material that was broadcasted earlier.

In this way, a user can access material that was broadcasted earlier in a more convenient way. However, although a user may *rewind* the broadcast he cannot forward the transmission. The operator only has access to material that was previously recorded. Since the operator does not have access to content that was not broadcasted earlier, he cannot supply it to a user either.

It is problem of the known system that a user cannot fast-forward a broadcast stream.

### SUMMARY OF THE INVENTION

It is an object of the invention to avoid or mitigate the disadvantages set out above.

These and other objects are achieved by content distribution systems described herein. A content distribution system achieving the object comprises a broadcast server configured for broadcasting a first content stream to at least one content receiving device. The content receiving device is adapted to be configured for receiving the first content stream and for requesting second content by sending a request comprising data identifying the first content stream to an on-demand server storing the second content. The second content is different from a broadcasted part of the first content stream. The on-demand server is configured for receiving the request, identifying the first content and sending the second content at least in dependency on said identification to the content receiving device.

In the aspect of the invention , while a content receiving device is receiving the first content stream, its user who may be watching the first content stream via a display device connected to or integrated with the content receiving device may be triggered by it and may want to watch a second content related to the first content stream. For example, he may want to fast-forward the content stream. To signal this, the user's content receiving device requests second content from an on-demand server. His request includes data identifying the first content stream to an on-demand server storing the second content. Since the on-demand server receives data identifying the first content stream he can identify the content stream that the user was watching. Knowing what content the user is watching enables him to select related content. Depending on this identification, the second content is selected.

To satisfy such a request the system can be configured to start sending the user second content from an on-demand server, in addition or instead of broadcasting the first content stream. By using an on-demand server who has access to the desired second content, the user can apply viewing options that are associated with receiving content from an on-demand server. For example, the user may fast-forward the second content. This is possible since the on-demand server has access to the second content.

The broadcaster provides a broadcasting service by broadcasting the first content stream. The first content stream and/or the second content may comprise many types of content. For example, the first content stream and/or the second content may comprise multimedia data such as video data and/or audio data. The first content stream and/or the second content may also comprise text information, e.g., subtitle data, teletext, electronic program guide information (EPG data), metadata, etc. The broadcast service may be digital, analog, or a combination thereof. The broadcast service may be received over the air, cable, digital data networks including the internet, Digital Video Broadcasting including Digital Video Broadcasting Terrestrial (DVB-T), Digital Video Broadcasting Handheld (DVB-H), etc. For example, the broadcaster may be a regular television broadcaster transmitting analog television programs, the broadcaster could also be a radio broadcaster. In many practical situations, the broadcaster will not itself have access to full program, i.e., the complete full first content that it broadcasts. For example, the broadcaster may simply forward a signal which is receives from a further broadcaster upstream. For example, the broadcaster may be a relay station where an over-the air signal is further routed to content receiving devices via cable.
The content receiving device is advantageously connected to a displaying device for displaying the first and second content. For example, the content receiving device may be connected to or integrated in, a television and/or a loudspeaker.

The second content could be the same content as is being broadcasted in the first content stream. For example, if the second content is some movie, the broadcaster may be streaming the same movie using the first content stream. At any point during the transmission of the movie, except at the very end of the movie, the second content contains a part which is not yet broadcasted. The content receiving device, by sending its request may inform the on-demand server that he want privileged access to this movie. For example, to enable fast-forwarding of the movie. The second content could also be of higher quality than the first content. In this case, a user who is watching the first content stream may continue watching the same content but in a higher quality. Other content receivers who are receiving the first content stream may be satisfied with the first content stream, and they do not need to upgrade to the second content. Others additional features in the second content may include: subtitles, other language, voice-over, extended versions of a movie instead of a shortened version, un-censored version etc.

The content receiving device may send its request in a fixed format. For example, this could be used to signal request for a default type of second content. Default second content may be determined in advance. For example, this option is suitable if the content receiving device is extended only with the option of 'switch to on-demand' or with 'view in higher quality' etc. Also such an 'on-demand' button, which may be on the device, or in a remote control etc, could switch to a default alternative, e.g., to a 'making of documentary. In this case, the on-demand server may select the second content solely on the basis of the identification of the first content stream.

In an embodiment, a more flexible approach is used. The content receiving device is further configured to include in the request an identifier. The on-demand server is further configured to send the second content in dependency on the identifier and on said identification. For example, the identifier may represent a category, for example any one of 'high-quality', 'documentary', 'on-demand'. In response to which the content receiving device may get, respectively, the same content but in a higher quality, a documentary related to the content that is currently playing, or a basic on-demand service wherein the second content is the same, but may be fast-forwarded.

Upon receiving data identifying the first content and an identifier identifying a category, the on-demand server may try to find related content in the requested category. For example, the on-demand server could consult a database that lists for a plurality of content one or more appropriate related content together with an indication of the category to which the appropriate related content belongs. The on-demands server indexes the database by searching for an identifier representing the first content and the identifier representing a category.

The data identifying the first content stream may comprise a content identifier, possibly obtained by the content receiving device from meta-data associated with the first content stream such as teletext, EPG data, etc. The data identifying the first content stream may comprise an identification of the channel, and optionally the viewing time. In the latter case, the on-demand server would identify the first content stream by, e.g., matching the channel information and time with a program guide, such as an EPG. If the viewing time is not included, the on-demand server could use the current time.

The on-demand server may use any type of content storing device to store the second content, e.g., hard disk, memories such as flash memories, etc. The on-demand server may also use a distributed content storage system. In the latter case, the on-demand server first retrieves the second content from the distributed content storage system, possibly concatenating different parts which were obtained from different parts of the distributed content storage system, before sending the second content to the content receiving device. The on-demand server may use known on-demand technology.

The second content may be different from a broadcasted part of the first content stream in various ways. One possibility is that a first part of the second content is the same as a broadcasted part of the first content stream while a second part of the second content is the same as a part of first content which has not yet been broadcasted but which is scheduled to be broadcast. Possibly, the second content is the same but in a higher quality. Optionally the broadcaster has access to the second content but degrades the content before broadcasting it, for example to accommodate a lower available band-with. Even though a unicast is typically only used by a single user, it may be that more bandwidth is available in the unicast. For example, the unicast may be part of a more expensive subscription. The unicast may also be using a different network, e.g., internet instead of cable TV. The internet may be offered using, e.g., DSL or ADSL.

Alternatively, the second content can also be completely different, for example, the second content is a related documentary. One more option is for the second content overlap only partially with the first content. For example, the second content may be comprise the first content but with some parts, e.g. commercials, omitted.

The on-demand server may comprise a computer. Identifying the first content may use any one of a channel that the user is watching, a current time and/or date, region in which the content receiving device is located, a content identifier, a content name, the broadcast corporation responsible for the first content etc.

In an embodiment the broadcaster is configured to broadcast the first content stream in a digital frame based format, e.g., in a MPEG stream. The content receiving device is configured to include in the request one or more frames of the first content stream. The on-demand server is configured to identify the first content stream by matching the one or more frames with the first content stream. This has the advantage that the on-demand server needs no scheduling information from the broadcast server that link channel numbers to content streams. It suffices if the on-demand server has a copy of the first content. It would also suffice if the on-demand server has list of hash values of the frames in the first content.

In the latter situation, the on-demand server may have a database comprising for each frame a hash of at least part of the frame data, e.g., the image data. The hash may be computed using a hash function such as sha-1. Upon receiving the frame, the on-demand server computes the hash from the frame. Next, the hash computed from the received frame is compared with computed hashes that are in the database. When a match is found the content from which the hash was computed is the sought content. The hash may also be computed by the content receiving device and included in the request instead of the frame.

Sending the request may use any suitable communication technology, e.g., e-mail, SMS, http, other internet protocols etc. The second content may be sent to the content receiving device using the same transmission options as a broadcaster has. A data network such as Internet is considered a suitable way to distribute the second network.

The selection of the second content may depend on other factors than the identification of the first content stream. For example, it may also depend on known preferences of the user of the content receiving device, or on the type, e.g. price of, subscription of the user.

If convenient, the second content could also be streamed to the content receiving device. The streaming speed could be higher than regular playing speed, this would have the result that a playing buffer which may be incorporated in the content receiving device fills with not-yet broadcasted content faster than the first content stream is played. This has the advantage that very little time is needed before the content receiving device can start playing from the second content. The user may even fast-forward, but only to the point the playing buffer is already filled with content from the second content. Known Video On-Demand (VOD) servers often have the functions pause, stop, fast-forward and sometimes download. For VOD streaming over IP in general RTSP protocol is used, which has the functions: pause, slow motion, wind/rewind

The user may use the system to skip ahead to the next scheduled program, etc.

In an embodiment, the content receiving device is configured to send the request during the receiving of the first content stream. In that case, the data identifying the first content stream need only comprise the current channel that the user is watching. It is also possible to include an identifier that encodes a region in which the content receiving device is located. In that case, the second content may be selected in dependency on the region, channel and current time. Alternatively, the content receiving device may request the second content at a later time, when the first content stream has finished. For example, a user may request to see content, e.g. related documentary, related to a program he watched yesterday. For example, a region indication in the requests helps for identifying the first content if the on-demand server receives a request from different regions in which different broadcasting schedules are used. By including a region identifier in the request the on-demand server can compare the data identifying the first content stream with the correct broadcasting information.

In an embodiment, the broadcaster is configured to stream the second content in the first content stream. Optionally, the second content is degraded before it is broadcasted in the first content stream.

One advantageous way to use the system occurs when the first-content stream is streaming first content which is a copy of the second content. The broadcaster is transmitting the same program as is stored the second content through the first content stream. At any moment before the end of the second content is broadcasted, the second content comprises not-yet broadcasted content. When a user receives the second content from the on-demand server he may, at least initially, continue watching the same content via the second content as is broadcasted in the first content stream. It would then initially seem that nothing changed. At some point while watching a program received via a live broadcast, the user continues watching the same program but receives it from an on-demand server. The difference becomes notable, for example, when the use presses a fast-forward button. While he is watching the program from a broadcast fast-forwarding is impossible, but when he is watching the program via an on-demand server fast-forwarding is possible. For example, the content receiving device may be enabled to display the second content at least partially in fast-forward mode beyond a broadcasted part of the first content stream.

The on-demand server and the broadcast server may be integrated in a single server, or, e.g. cooperate closely in a system. On the other hand, the operation of the on-demand server may also be completely independent from the operation of the broadcast server, and may even be operated by competing companies. In the latter case, the broadcast server and the on-demand server may for example obtain their copies of first content and/or of alternative content from different sources. The on-demand server may obtain programming information of the scheduled broadcasts of the broadcast server from public sources, e.g., television guides, possibly electronic television guides or electronic program guides (EPG), etc.

A further aspect of the invention concerns a method of distributing content comprising broadcasting a first content stream to at least one content receiving device, receiving the first content stream at the content receiving device, requesting second content by sending a request comprising data identifying the first content stream to an on-demand server storing the second content from the content receiving device, the second content being different from a broadcasted part of the first content stream, receiving the request, identifying the first content and sending the second content at least in dependency on said identification to the content receiving device.

Corresponding claims concerning a method for sending second content to a content receiving device, e.g., from an on-demand server, and a method of receiving content from an on-demand server, e.g., on a content receiving device, are set out in the claims.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, netbooks, set-top boxes, smartphones, etc.

In a preferred embodiment, the computer program comprises computer program code means adapted to perform all the steps of a method according to the invention when the computer program is run on a computer. Preferably, the computer program is embodied on a computer readable medium.

### BRIEF DESCRIPTION OF THE DRAWINGS

The invention is explained in further detail by way of example and with reference to the accompanying drawings, wherein:
Figure 1 is a block diagram illustrating a first embodiment of the content distribution system according to the invention,
Figure 2 shows a schematic front view of an embodiment of a content receiving device,
Figure 3 shows a flowchart that schematically illustrates a method of distributing content.

Throughout the Figures, similar or corresponding features are indicated by same reference numerals.

### List of Reference Numerals:

- 100: a content distribution system
- 110: an on-demand server
- 120, 122: a content receiving device
- 130: a connection for sending a request comprising data identifying the first content stream to an on-demand server storing the second content
- 132: a connection for receiving the second content
- 140: a broadcast server
- 142: a connection for receiving the first content stream
- 145: a connection for receiving broadcasting information
- 150: a further broadcast server
- 210: an on-demand button
- 220: an alternative content button
- 230: a connection port, for connecting to a television
- 240: a connection port to connect to a cable TV network
- 250: an Internet connection port
- 300: a method of distributing content

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

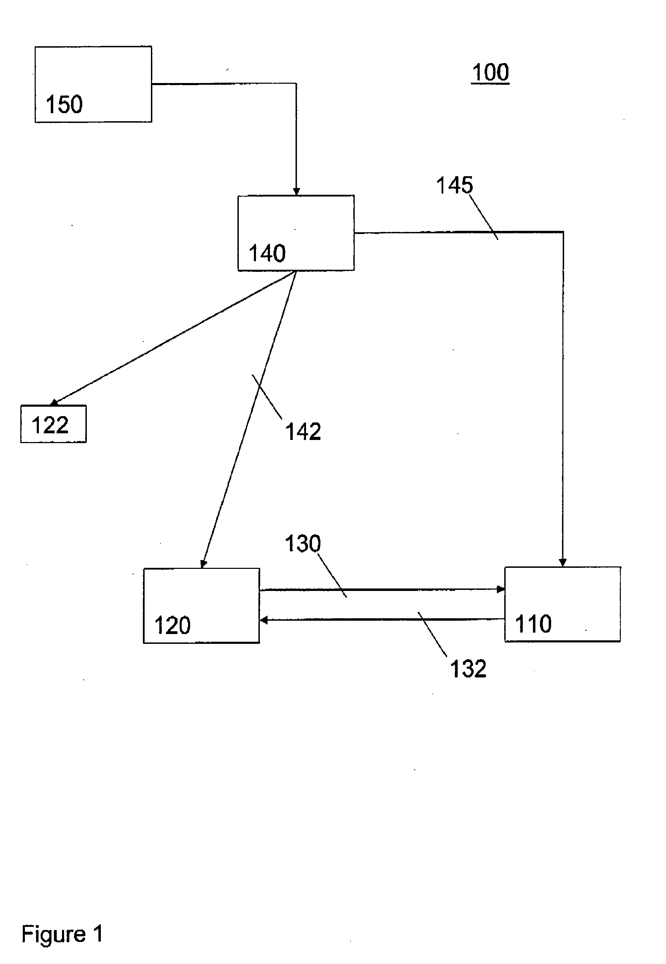

Figure 1 illustrates in a block diagram a content distribution system according to the invention.

The figure shows a broadcast server 140 who is connected with a number of content receiving devices for transmitting a first content stream to them. Two of those devices are shown, content receiving device 120 and 122. One of the connections from broadcast server 140 to the content receiving devices is labeled 142. Connection 142 runs from broadcast server 140 to content receiving device 120. The broadcast server may be connected to the content receiving device 120 and content receiving device 122 using a cable connection for receiving television content. The television content may also be received over ADSL, VDSL, etc.

A content receiving device, such as device 120 and/or 122, could conveniently be a set-top box. Other choices for a content receiving device include, e.g., a television, a radio, a desktop computer, a laptop, a mobile phone, etc.

One or more of the content receiving devices are connected to an on-demand server 110. The figure shows one such device, content receiving device 120 who is connected to on-demand server 110. In this embodiment, two connections are used between content receiving device 120 and on-demand server 110: a connection 130 for sending a request comprising data identifying the first content stream from content receiving device 120 to on-demand server 110, and a connection 132 from on-demand server 110 to content receiving device 120 for receiving the second content. On-demand server 110 has access to a storage device (not shown) storing second content. Various types of connection may be used for requesting connection 130 and second receiving connection 132. For example, both connections may be internet connections. For example, requesting connection 130 may be configured to use SMS messages, for http packets, for e-mail etc, and second receiving connection 132 may be configured for downloading content, for cable transmission over a reserved channel, etc. Connection 130 and 132 may be the same bi-directional connection.

Alternatively, requesting connection 130 comprises an IP network over which content receiving device 120 makes its content request using HTTP. The receiving connection 132 may also comprise an IP network, over which on-demand server 110 replies using HTTP. Content receiving device 120 then may request the content using the Real-Time Streaming Protocol (RTSP) over the IP network 132. IP network 130 and 132 may be the same or different.

Note that connection 142 may also comprise an IP network. In that case, broadcaster 140 and connection receiving device may use Internet Protocol Television (IPTV).

When using IPTV, the Internet Group Management Protocol (IGMP) may be used for multicasting from broadcaster 140 to connection receiving devices 122 and 120, and RTSP may be used for the unicast from on-demand server 110 to content receiving device 120.

On-demand server 110 is further connected to broadcast server 140 via connection 145 to receive broadcasting information. For example, broadcasting information receiving connection 145 may be an internet connection to receive EPG data. Broadcasting information receiving connection145 may also be configured to receive at on-demand server 110 from broadcast server 140 a copy of the first content stream. On-demand server 110 may also receive over receiving connection 145, e.g., a copy of other content streams to which content receiving device 120 is not currently tuned in, but to which he may start watching later.

Figure 1 further shows a further broadcast server 150, which is connected to broadcast server 140. In this system broadcast server 140 is configured to forward a content stream that broadcast server 140 receives from further broadcast server 150 to a number of content receiving devices including content receiving device 120 and content receiving device 122. Optionally, broadcast server 140 may also have stored in a storing device (not shown) a copy of the scheduled first content, and broadcast from that copy. Broadcast server 140 may also broadcast from a live event, without having a stored copy to broadcast from. In the latter case, broadcast server 140 may use a transmission buffer to introduce a delay between the live occurring of the event and the transmission to content receiving device 120 and content receiving device 122 thereof. Broadcast server 140 may also be configured for a combination of different types of broadcasting. In fact, broadcaster 150 may be omitted altogether. For example, broadcast server 140 may at some times transmit from locally stored content and at other times forward a transmission it receives from further broadcast server 150. The connection between further broadcast server 150 and broadcaster 140 may use any suitable content transmission connection. For example, further broadcast server 150 may transmits content to broadcast server 140 over the air, e.g. using antenna's or satellites, while broadcast server 140 forwards this content to content receiving device 120 via a cable connection.

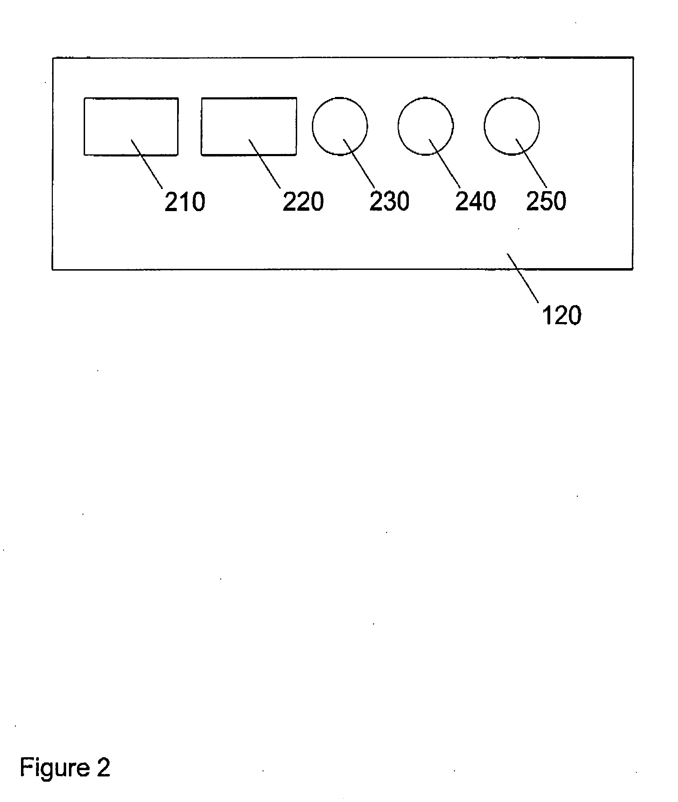

Figure 2 shows a schematic front view of an embodiment of content receiving device 120. Shown in the figure are a connection port 230, for connecting content receiving device 120 to a television, an on-demand button 210, an alternative content button 220, a connection port 240 to connect content receiving device 120 to a cable network for receiving television in content receiving device 120, e.g., via radio frequency signals transmitted through fixed optical fibers or coaxial cables, and an internet connection port 250 to connect content receiving device 120 to the on-demand server 110, e.g., via internet. Internet connection port 250 could be an Ethernet port.

Internet connection port 250 and connection port 240 may both be configured as Internet connections. For example, ports 250 and 240 may use ADSL or DSL, and they can use the same network up to the Digital Subscriber Line Access Multiplexer (DSLAM).

Broadcaster 140 may use IPTV via IGMP to multicast to content receivers 120 and 122. To receive the broadcast the content receiving devices may use an IGMP command such as 'IGMP join channel 7'. A content receiving device may store these commands, e.g., join channel commands, in a buffer of the content receiving device. When content receiving device 120 makes a request to on-demand server 110, the buffer can be read out to determine the current channel. For example, the contents of the buffer can be sent to on-demand serve 110. Using an EPG on-demand server 110 can determine which program is being played on the current channel. The on-demand server 110 can translate the request of content receiving device 10 into a correct RTSP for the requested content. The calls from device 120 to server 110 and back may both contain an IP address.

Alternatively, on-demand server 110 may respond to the request with an URL indicating the second content stream. Upon receiving the ULR, device 120 may convert it to RTSP.

During operation, content receiving device 120 receives from broadcast server 140 a first content stream, e.g. through port 240. Content receiving device 120 may be connected to, or comprises viewing equipment to view the first content stream. For example, content receiving device 120 is connected to a television, possibly via TV connection port 230. The first content stream that broadcast server 140 broadcasts can be seen by multiple content receiving devices. For example, content receiving device 120 and content receiving device 122 may both watch the same broadcast stream at the same time. Using broadcasting, or multicasting, saves bandwidth since the same content is received by multiple users even though it is transmitted only once. For example, in case IPTV over DSL is used, the shared network runs from broadcaster 140 up to the DSLAM.

While broadcast server 140 is broadcasting the first content stream and while a user is watching this stream, he may be triggered by watching the content that he might want to stop viewing the content that is currently being broadcasted, that he does not want to review what was already broadcasted, but that he wants to watch related content.

We will suppose as an example that the user wants to fast-forward the first content stream that is currently receiving from broadcast server 140 and watching. To accomplish this he sends a request comprising data identifying the first content stream to on-demand server 110. For example, he may press on-demand button 210. content receiving device 120 thereupon sends a data packet over requesting connection 130 to on-demand server 110, e.g., over internet connection port 250. The data packet comprises information, which represents the current channel that the user was watching when he pressed on-demand button 210. The packet may also comprise information identifying content receiving device 120 to on-demand server 110, for example, it may comprise an IP address, a device number, etc.

Information about the channel the user is watching can be derived in several ways. In case of broadcasting to a cable television, the local tuner connected to the television determines the channel. In case of IPTV, using IGMP requests, the last IGMP request join channel or channel change command can be placed in a buffer. Upon selecting the on-demand or alternative content button, the content receiving device 120 reads the channel from the buffered IGMP command, or from the tuner, and puts it in the request to on-demand server 110. In this way, the channel is determined without interfering with the current broadcast signal sent to content receiving device120

An Electronic Program Guide (EPG) may be supplied separately to on-demand server 110. A connection 145 with the broadcaster is not necessary. An Electronic Program Guide (EPG) comprises information about current radio and/or television broadcast in a machine-readable format.

Upon receiving the data packet, on-demand server 110 identifies what content the user was watching, for example he matches the channel number with a an EPG that he received earlier from broadcast server 140 over broadcasting information receiving connection 145. By looking in the EPG at the channel comprised in the data packet and the current time, he finds what content the user is watching. Next, the on-demand server 110 determines if he has corresponding second content stored. We will suppose as an example that on-demand server 110 finds the exact same content as broadcast server 140 is broadcasting, but including those parts which were not yet transmitted to content receiving device 120.

Alternatively, on-demand server 110 can show a table or list of related content, and content receiving device 120 can select an item from it, e.g., by skipping through the items and selecting an item of interest

Next on-demand server 110 determines a return address. If the data packet contains an IP address he may use that address as a return address, otherwise he may have to match data identifying content receiving device 120 against a table containing return addresses. In case on-demand server 110 has no appropriate material, he may send an error message to the return address. Upon receiving the error message content receiving device 120 may display over TV connection port 230 that on-demand server 110 does not have the requested content. In case on-demand server 110 determines that he does have the requested content he starts sending the content to content receiving device 120, e.g., over internet connection port 250.

Upon receiving content, e.g., via internet connection port 250, content receiving device 120 may decide to stop displaying the first content stream and start displaying the content received from on-demand server 110 instead. In a preferred embodiment, the content received over internet connection port 250 is synchronized with the content received over cable TV connection port 240. For example, on-demand server 110 can insert time-markers in the second content, to indicate at which point in time that point in the second content was transmitted by broadcast server 140. On-demand server 110 can insert one or more of such markers by matching the second content which a copy of the first content stream that he receives from some source, e.g., directly from broadcast server 140 or indirectly from content receiving device 120. A content receiving device 120 who receives second content which comprises a time marker can determine a point in the second content which corresponds with the current time. For example, he find the time marker which is closes to the current time, then determine the time-difference between the current time and the time indicated by the time marker, and start displaying the second content from the time marker but at an offset, the offset taking an amount of time equal to the time difference.

Content receiving device 120 receives the second content preferably in a unicast from on-demand server 110. Connected to an on-demand server for the second content gives content receiving device 120 new operating possibilities. For example, content receiving device 120 may fast-forward in the second content. Note that content receiving device 120 may fast forward because it has actually downloaded the second content, or because it is displaying second content in a second content stream. In the latter situation, content receiving device 120 could send on-demand server 110 a fast-forward signal to indicate that on-demand server 110 should increase the streaming speed.

We will now suppose that the user pressed alternative content button 220 instead on-demand button 210. In that case, content receiving device 120 may send the same data packet to on-demand server 110 as it did for on-demand button 210 but include an identifier, which represents to on-demand server 110 that the user is interested in alternative related content. Instead of looking for the same content on-demand server 110 may look for different but related content. There are many possibilities, for example, if the first content is an episode from a sit-com, on-demand server 110 may look for the next episode. If the first content is a movie, on-demand server 110 could look for a making-off documentary, etc.

Upon receiving the data packet after alternative content button 220 was pressed, on-demand server 110 will again first identify the content, and next determine if he has appropriate alternative content. For example, he may consult a database, which comprises for a large number of possible first contents, what an appropriate alternative would be. Again, if no such alternative is found an error message may be sent to content receiving device 120, otherwise, on-demand server 110 may start sending the alternative second content to on-demand server 110.

Other types of content and other content transmissions types are also possible, e.g., content receiving device 120 and content receiving device 122 may comprise a radio to receive FM radio from broadcast server 140 comprising an FM Radio transmitter. In the latter case, using the invention the user could download the MP3 of a song he heard on the radio. For example, the radio could include a 'download' button. Upon pressing it, the radio sends a signal to an on-demand server and requests to download the MP3. This type of radio is preferably built into a mobile phone.

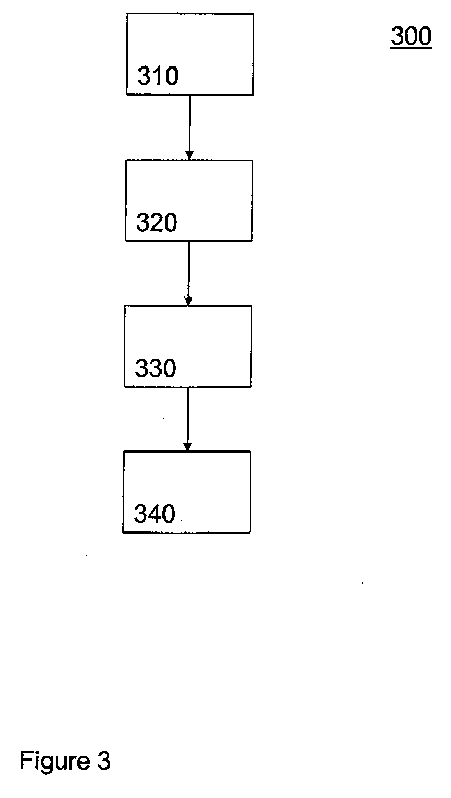

Figure 3 shows a flowchart that schematically illustrates a method of distributing content 300. Shown are four steps of the method. Step 310 comprises broadcasting a first content stream to at least one content receiving device. Step 320 comprises receiving the first content stream at the content receiving device. Step 330 comprises requesting second content by sending a request comprising data identifying the first content stream to an on-demand server storing the second content from the content receiving device. The second content may be different from a broadcasted part of the first content stream. Step 340 comprises receiving the request, identifying the first content and sending the second content at least in dependency on said identification to the content receiving device.

A method according to the invention may be executed using software, which comprises instructions for causing a processor system to perform method 300. Software may only include steps taken by a content receiving device, or only those taken by an on-demand server, or only those taken by a broadcaster. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example, processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. In addition, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Furthermore, the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A content distribution system (100) comprising
- a broadcast server (140) configured for broadcasting a first content stream to at least one content receiving device (120),
- the content receiving device configured for receiving the first content stream and for requesting second content by sending a request comprising data identifying the first content stream to an on-demand server (110) storing the second content, the second content being different from a broadcasted part of the first content stream, and
- the on-demand server configured for receiving the request, identifying the first content and sending the second content at least in dependency on said identification to the content receiving device.

2. A content distribution system as in claim 1 wherein the content receiving device is configured to send the request during the receiving of the first content stream.

3. A content distribution system as in any one of the preceding claims, wherein the content receiving device is further configured to include in the request an identifier, and wherein the on-demand server is further configured to send the second content in dependency on the identifier and on said identification.

4. A content distribution system as in any one of the preceding claims, wherein
- the broadcaster is configured to broadcast the first content stream in a digital frame based format,
- the content receiving device is configured to include in the request a frame of the first content stream,
- the on-demand server is configured to identify the first content stream by matching the frame with the first content stream.

5. A content distribution system as in any one of the preceding claims, wherein the broadcaster is configured to stream the second content in the first content stream.

6. A content distribution system as in claim 5, wherein the second content is degraded before it is broadcasted in the first content stream.

7. A content receiving device comprising
- a first receiving device for receiving a broadcasted first content stream from a broadcast server
- a requesting device for requesting second content by sending a request comprising data identifying the first content stream to an on-demand server storing the second content, the second content being different from a broadcasted part of the first content stream
- a second receiving device for receiving the second content from the on-demand server.

8. A content receiving device as in claim 7 wherein the content receiving device is configured to send the request during the receiving of the first content stream.

9. A content receiving device as in any one of claims 7 and 8, wherein the content receiving device is configured to enable displaying the first content stream and, upon receiving the second content, to interrupt displaying the first content stream and to switch to displaying the second content stream.

10. A content receiving device as in any one of claims 7 to 8, enabled to display the second content at least partially in fast-forward mode.

11. An on-demand server comprising
- a storage device for storing a second content
- a request receiving device for receiving a request for the second content from a content receiving device, the request comprising data identifying a first content stream, the second content being different from a broadcasted part of the first content stream,
- an identifying device for identifying the first content and sending the second content at least in dependency on said identification to the content receiving device.

12. An on-demand server as in claim 11, wherein the on-demand server is configured for receiving from the broadcast server information identifying the first content stream.

13. A method of distributing content comprising
- broadcasting a first content stream to at least one content receiving device,
- receiving the first content stream at the content receiving device,
- requesting second content by sending a request comprising data identifying the first content stream to an on-demand server storing the second content from the content receiving device, the second content being different from a broadcasted part of the first content stream,
- receiving the request, identifying the first content and sending the second content at least in dependency on said identification to the content receiving device.

14. A method for sending second content to a content receiving device comprising
- receiving a request for the second content from the content receiving device, the request comprising data identifying a first content stream, the second content being different from a broadcasted part of the first content stream,
- identifying the first content and sending the second content at least in dependency on said identification to the content receiving device.

15. A method of receiving content from an on-demand server comprising
- receiving a broadcasted first content stream from a broadcast server
- requesting the second content by sending a request comprising data identifying the first content stream to an on-demand server storing the second content, the second content being different from a broadcasted part of the first content stream
- receiving the second content from the on-demand server.

16. A computer program comprising computer program code means adapted to perform all the steps of any one claims 13, 14 and 15 when the computer program is run on a computer.

17. A computer program as claimed in claim 16 embodied on a computer readable medium.
